# FASCICULE DE BREVET EUROPEEN

(11) **EP 0 326 479 B1**
(45) Date de publication et mention de la délivrance du brevet: **26.05.1993**
(21) Numéro de dépôt: 89400194.0
(22) Date de dépôt: 24.01.1989
(51) Int. Cl.: H01J 47/02, G01T 1/29

(54) **Détecteur pour tomographie à rayons X**
Röntgenstrahlungsdetektor für Tomographie
Detector for X-ray tomography

(30) Priorité: 26.01.1988 FR 8800855
(43) Date de publication de la demande: 02.08.1989
(73) Titulaire: COMMISSARIAT A L'ENERGIE ATOMIQUE, 75015 Paris Cédex 15 (FR)
(72) Inventeur: Drouet, Martine, F-93380 Pierrefitte sur Seine (FR); Bonnefoy, Jean-Paul, F-38100 Grenoble (FR); Guers, Henri, F-38100 Grenoble (FR); Pleyber, Gaetan, F-38420 Domene (FR)
(74) Mandataire: Mongrédien, André

(56) Documents cités:
- EP-A- 0 012 065
- EP-A- 0 064 913

## Description

La présente invention concerne un détecteur pour tomographie à rayons X.

Elle s'applique à la détection de rayons X ayant traversé un organe ou un objet selon un plan de coupe prédéterminé ; le détecteur fournit des signaux qui sont traités par exemple par un calculateur pour obtenir l'image de la coupe de cet organe ou de cet objet. Il est bien entendu que le détecteur de l'invention peut être utilisé en radiographie, qui est une forme simplifiée de la tomographie.

On sait que l'obtention d'une image d'une coupe d'un organe ou d'un objet à l'aide d'un appareil de tomographie consiste à émettre en direction de cet organe ou de cet objet un faisceau plan de rayons X incidents, ce faisceau présentant une large ouverture angulaire et une faible épaisseur. Le détecteur de tomographie qui est utilisé dans cet appareil permet de mesurer l'absorption des rayons X traversant l'organe ou l'objet, cette absorption étant liée à la densité des tissus de l'organe examiné ou à la densité des matériaux constituant l'objet étudié.

Une multiplicité de balayages dans des directions croisées permet de connaître, après un traitement numérique approprié des signaux recueillis sur les cellules de détection du détecteur, la valeur de l'absorption des rayons X en chaque point du plan de coupe considéré, et ainsi de connaître la densité des tissus de l'organe ou la densité des matériaux constituant l'objet. La connaissance des différentes valeurs de cette densité permet de reconstituer l'image de la coupe de l'organe ou de l'objet.

On connaît un détecteur pour tomographie à rayons X qui présente une structure simple, mais qui n'est pas parfait. Ce détecteur comprend une chambre étanche contenant un gaz ionisable par des rayons incidents issus de l'organe ou de l'objet et, dans cette chanbre étanche, une plaque de polarisation. Cette plaque est parallèle au plan de faisceau de rayons incidents et elle est portée à une haute tension par exemple positive. Un ensemble d'électrodes de collection de charge de même signe que celui de la polarisation de la plaque et résultant de l'ionisation du gaz par les rayons X issus de l'objet, est disposé en regard de la plaque précédente. Ces électrodes de collection des charges (ou électrodes de mesure), qui ont une forme plane et allongée, sont portées à un potentiel voisin d'un potentiel de référence. Ces électrodes sont portées par un substat isolant et sont orientées vers une fenêtre d'entrée de la chambre recevant les rayons X incidents provenant de l'objet ou de l'organe. Chaque électrode de mesure définit avec la partie en regard de la plaque de polarisation une cellule élémentaire du détecteur. Chaque électrode fournit un courant de mesure proportionnel à la quantité de charges obtenues par l'ionisation du gaz en regard de cette électrode, sous l'effet des rayons issus de l'objet ou de l'organe. Les courants de mesure sont mesurés par des moyens de mesures auxquels les électrodes sont reliées.

Dans ce type connu de détecteur, la plaque de polarisation est alimentée par une source électrique de tension, extérieure à la chambre ; et les moyens de mesure des courants circulant dans les électrodes sont eux aussi extérieurs à la chambre. Il est donc prévu des moyens de connexion qui traversent la chambre étanche pour permettre l'alimentation de la plaque et les mesures de courant des électrodes. Ces moyens de connexion peuvent être de deux types :
- des fils de connexion relient respectivement les électrodes et la plaque à des bornes de connexion isolées de la chambre et situées sur une face arrière de celle-ci, opposée à la fenêtre. Ces bornes sont ensuite reliées par d'autres fils de connexion, à la source d'alimentation et aux moyens de mesure ;
- des fils de connexion relient la plaque et chacune des électrodes respectivement à des lianes d'alimentation et de mesures noyées dans une bande souple isolante débouchant à l'intérieur de la chambre, entre le fond de celle-ci et un couvercle qui la ferme de façon étanche. Ce type de détecteur est décrit dans le documents EP-A-0 012065.

Pour maintenir un écartement constant entre la plaque de polarisation et le substrat qui supporte les électrodes de mesure, il est connu de placer entre cette plaque et ce substrat une entretoise isolante ajourée pour le passage du gaz qui a la forme d'un cadre et qui absorbe peu les rayons X.

Ce type connu de détecteur qui est décrit dans le document EP-A-0 064 913, constituant l'objet de la première partie de la revendication 1. présente de nombreux inconvénients. Le principal inconvénient résulte du fait que le passage des rayons X dans l'entretoise isolante, ionise le matériau isolant constituant l'entretoise. Il en résulte que sans précaution particulière, des charges électriques s'accumulent dans ce matériau et à sa surface, et s'écoulent à travers les électrodes, vers les moyens de mesure où elles apparaissent comme des fuites électriques. Ces fuites ne sont pas constantes et elles dépendent localement de l'intensité des rayons X reçus et des caractéristiques électriques du matériau isolant constituant l'entretoise. Ce matériau, qui est généralement un verre époxy, présente un phénomène de traînage de durée très importante, incompatible avec la période de scrutation des voies de mesure. Par ailleurs, l'ensemble de détection occupe partiellement la chambre, il existe donc des volumes morts entre le volume occupé par l'ensemble de détection et le volume intérieur de la chambre à l'intérieur desquels il existe un champ électrique entre la plaque de polarisation et les fils de connexions. La configuration de ce champ est mal définie. Il en résulte que des charges électriques vagabondes circulent dans les volumes morts de la chambre et créent des courants parasites nuisibles à la qualité de l'image tomographique que l'on souhaite obtenir. Cette détection de charges vagabondes induit en effet des variations apparentes de sensibilité des cellules de détection ; ces variations se traduisent, dans l'image obtenue après traitement des courants de mesure fournis par ces cellules, par des artéfacts néfastes à la qualité de l'image.

De plus, les charges électriques, qui peuvent s'accumuler à la surface du matériau isolant constituant l'entretoise séparant les électrodes et la plaque de polarisation, induisent une modification de la répartition des lignes de potentiel du champ électrique dans les cellules de détection ; il en résulte un risque d'amorçage entre les élecrodes de mesure et la plaque de polarisation.

Un autre inconvénient résulte de l'accumulation des charges électriques, notamment à la surface ou dans le matériau isolant de l'entretoise ; cette accumulation modifie la perpendicularité du champ électrique par rapport aux électrodes et fait évoluer de façon non contrôlée le taux de collection des charges créées dans le gaz.

Enfin, un autre inconvénient de ce type de détecteur connu résulte de la connexion de la plaque à des moyens extérieurs d'alimentation électrique, et de la connexion des électrodes à des moyens extérieurs de mesure. Ces connexions, qui nécessitent l'utilisation de fils de connexion reliés aux électrodes et à la plaque et réliés à des bornes ou à une nappe de conducteurs débouchant sur la face arrière de la chambre, est difficile à réaliser. De plus, ces fils conducteurs, ont une répartition, à l'intérieur de la chambre, difficile à contrôler.

L'invention a pour but de remédier à ces inconvénients et notamment de réaliser un détecteur de tomographie à rayons X dans lequel on évite, grâce à des bandes conductrices sur lesquelles repose l'entretoise isolante, au voisinage des électrodes de mesure, les perturbations dues aux charges électriques parasites qui s'accumulent dans cette entretoise ou à sa surface ; ces bandes conductrices forment un anneau de garde porté à un potentiel voisin de celui des électrodes de mesure . Ce détecteur permet également de simplifier les moyens de connexion qui relient en particulier les électrodes et la plaque intérieures à l'enceinte avec les moyens de mesure et la source électrique d'alimentation, extérieurs à cette enceinte ; ces moyens de connexion sont réalisés sous forme de pistes conductrices imprimées sur le substrat qui supporte les électrodes ; ces électrodes sont de préférence elles-mêmes imprimées sur ce substrat ; les pistes conductrices débouchent sur la face arrière de l'enceinte, à travers un passage isolant, facile à réaliser.

L'invention a pour objet un détecteur pour tomographie à rayons X apte à détecter des rayons X incidents ayant traversé un organe ou un objet et formant un fasceau plan de faible épaisseur, comprenant au moins une chambre étanche, remplie par au moins un gaz ionisable par les rayons X incidents traversant une fenêtre d'entrée s'étendant sur une face avant de cette chambre, l'intérieur de la chambre étant partiellement occupé, entre sa face avant et une face arrière opposée à la face avant, par un enesemble de détection qui présente une face avant en regard de la fenêtre d'entrée s'étendant sur une face avant de cette chambre, l'intérieur de la chambre étant partiellement occupé, entre sa face avant et une face arrière opposée à la face avant, par un ensemble de détection qui présente une face avant en regard de la fenêtre et une face arrière en regard de la face arrière de la chambre, cette chambre étant aussi partiellement occupée entre la face arrière de l'ensemble de détection et la face arrière de la chambre, par des moyens traversant la face arrière de la chambre pour connecter l'ensemble de détection avec des moyens de mesure et d'alimentation électrique extérieurs à la chambre, l'ensemble de détection comprenant :
- au moins un empilement de détection qui comporte une plaque conductrice de polarisation, parallèle au plan du faisceau incident ;
- un ensemble d'électrodes de mesure délimité par une première et une dernière électrodes, ces électrodes collectant les charges résultant de l'ionisation du gaz par les rayons X et étant formées de bandes conductrices orientées vers la fenêtre, dispersées sur un substrat plan isolant parallèle au plan du faisceau ;
- une entretoise électriquement isolante, pour séparer la plaque de polarisation et les électrodes et pour maintenir parallèles cette plaque et le substrat ;

caractérisé en ce que l'entretoise isolante a la forme d'un cadre ayant deux faces opposées parallèles d'appui, la plaque s'appuyant sur une première de ces faces d'appui, la deuxième face d'appui s'appuyant sur une première bande conductrice disposée sur le substrat, transversalement aux électrodes, en regard de la fenêtre et le long de celle-ci ainsi que le long de la première et de la dernière électrodes dudit ensemble, la deuxième face d'appui s'appuyant sur une deuxième bande conductrice reposant sur une bande isolante superposée transversalement aux électrodes, à proximité de la face arrière de l'ensemble de détection, les moyens de connexion comportant des pistes conductrices imprimées sur le substrat respectivement reliées à l'intérieur de ladite chambre auxdites électrodes, aux première et deuxième bandes conductrices et à la plaque, ces pistes étant respectivement reliées à l'extérieur de la chambre, auxdits moyens de mesure, aux moyens d'alimentation électrique et à un potentiel de référence, le substrat et les pistes traversant au moins une ouverture de la face arrière de la chambre par un montage de sortie, fixé autour du substrat et des pistes et fixé à la face arrière de la chambre.

Selon une autre caractéristique le montage de sortie comporte un manchon comprenant une ouverture de passage des pistes et du substrat qui sont fixées dans cette ouverture par une colle isolante et étanche, ce manchon s'engageant dans l'ouverture de la face arrière de la chambre et comportant un épaulement muni de moyens de fixation sur la face arrière de la chambre, un joint d'étanchéité étant interposé entre cet épaulement et la face arrière de la chambre.

Selon une caractéristique particulière de l'invention, la première bande conductrice est imprimée sur le substrat, la deuxième bande conductrice étant imprimée sur la bande isolante.

Les caractéristiques et avantages de l'invention ressortiront mieux de la description qui va suivre, donnée en référence aux dessins annexés dans lesquels :
- la figure 1 est une coupe schématique d'un détecteur conforme à l'invention, cette coupe étant réalisée dans un plan parallèle aux rayons incidents, entre la plaque de polarisation et les électrodes de mesure ;
- la figure 2 est une coupe schématique transversale du détecteur de la figure 1, selon l'axe AA.

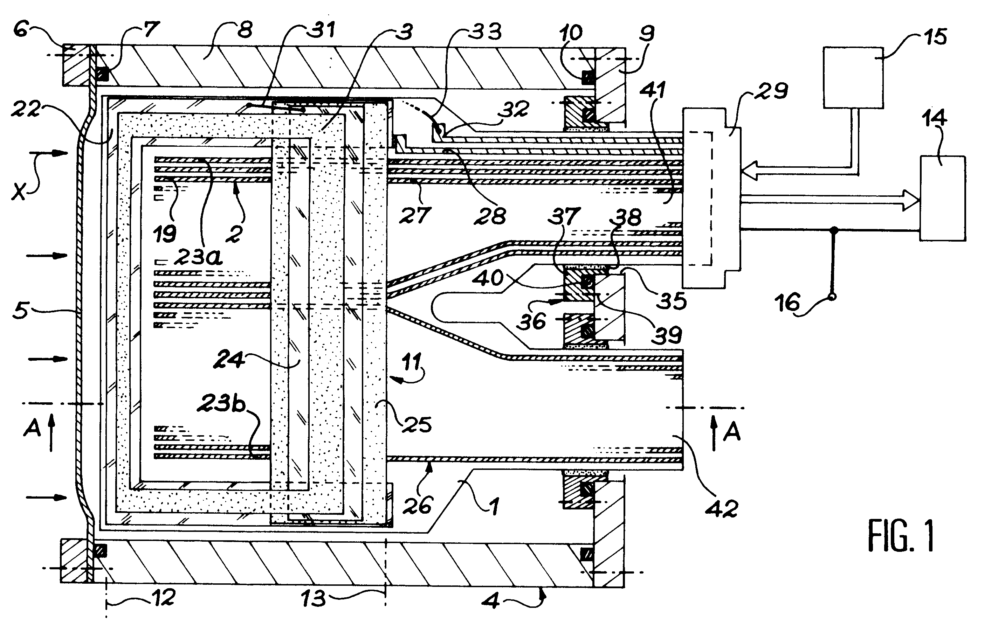

La figure 1 représente schématiquement et en coupe un détecteur pour tomographie à rayons X, conforme à l'invention. la coupe réalisée ici est dans un plan parallèle au plan du faisceau de rayons X incidents, entre le plan d'un substrat isolant 1 supportant un ensemble d'électrodes 2 de mesure , et le plan d'une plaque de polarisation qui sera décrite plus loin en détail, et qui est parallèle au plan des rayons X incidents. La plaque de polarisation et le substrat isolant sont séparés par une entretoise 3 électriquement isolante et peu absorbante aux rayons X.

Le détecteur représenté sur cette figure comprend essentiellement une chambre étanche 4, remplie d'au moins un gaz ionisable par les rayons X incidents. Une face avant de cette chambre comporte une fenêtre d'entrée des rayonnements incidents. Cette fenêtre d'entrée est constituée par une ouverture sur une face avant de l'enceinte, fermée par une membrane fine 5 absorbant peu les rayonnements X incidents. L'ouverture est fermée de façon étanche par la membrane 5, grâce à une bride 6 et à un joint torique 7 par exemple situé dans le corps 8 de la chambre. La bride 6 est bien entendu munie de moyens, non représentés sur cette figure, pour la fixer au corps 8 de la chambre 4. La face arrière de l'enceinte est fermée par un couvercle 9. L'étanchéité entre le couvercle 9 et le corps 8 des la chambre est assurée par exemple par un joint torique 10, le couvercle étant rendu solidaire du corps 8 de la chambre par des moyens de fixation non représentés sur cette figure.

L'intérieur de la chambre 4, entre la face avant 5 et la face arrière 9 de cette chambre, est partiellement occupé par un ensemble de détection 11 comprenant notamment l'ensemble d'électrodes 2 et la plaque de polarisation, non représentés sur cette figure. Cet ensemble de détection présente une face avant 12 en regard de la fenêtre 5, et une face arrière 13 en regard de la face arrière 9 de la chambre. L'intérieur de la chambre 4, est aussi occupé, entre la face arrière 13 de l'ensemble de détection 11 et la face arrière 9 de la chambre, par des moyens qui seront décrits plus loin en détail ; ces moyens traversent la face arrière de la chambre et permettent de connecter l'ensemble de détection 11 avec des moyens de mesure 14, avec des moyens d'alimentation électriques constitués par une source de tension 15 et avec un potentiel de référence 16, extérieurs à la chambre.

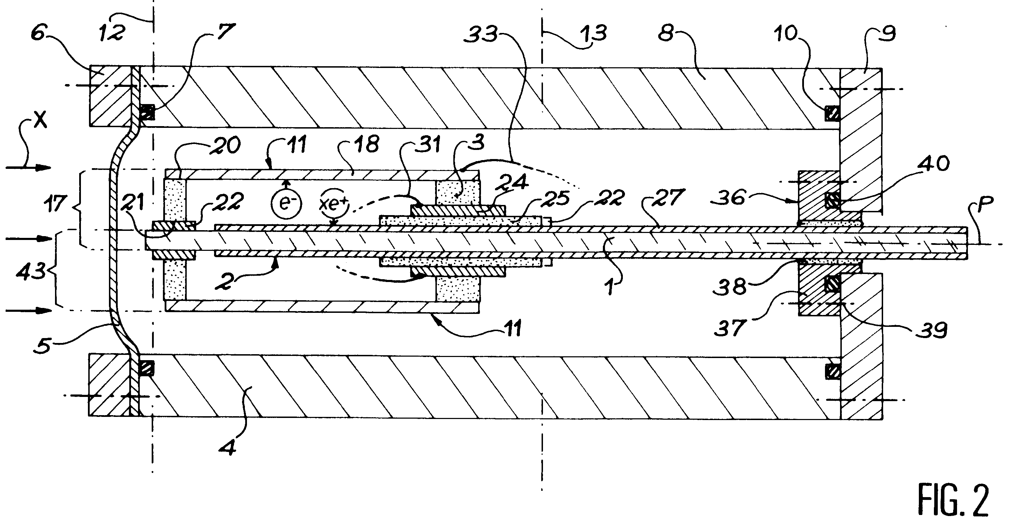

La figure 2, qui représente schématiquement le détecteur de l'invention en coupe transversale AA, permet de mieux comprendre, en relation avec la figure 1, la structure de ce détecteur. Les mêmes éléments portent les mêmes références sur cette figure et sur la figure 1.

L'ensemble de détection 11 comprend au moins un empilement 17 qui comporte la plaque de polarisation 18, parallèle au plan P du faisceau incident de rayons X. Le faisceau incident qui présente sur la figure une épaisseur non négligeable a en réalité une épaisseur très faible ; on considère donc que le faisceau est contenu dans le plan P. La plaque de polarisation 18 est reliée par des moyens de connexion, qui seront décrits plus loin en détail, à la source électrique de tension 15 ; cette source électrique fournit une tension continue (+HT) positive par exemple. Lors de l'ionisation du gaz sous l'effet des rayons X incidents parvenant à l'intérieur de la chambre 4, la plaque 18, portée à un potentiel (+HT) de quelques KV, collecte des charges négatives telles que des électrons (e⁻) ; les électrodes 2 de mesure ou de collection des charges permettent de collecter des charges positives telles que des ions. Elles sont reliées respectivement par les moyens de connexion, qui seront décrits plus loin en détail, aux moyens de mesure 14 alimentés par des moyens non représentés. Ces électrodes sont portées par les charges collectées et par les moyens de mesure à un potentiel voisin du potentiel de référence. Il est évident que si la plaque était portée à un potentiel négatif, elle collecterait des charges positives, tandis que les électrodes collecteraient des charges négatives. Les électrodes sont portées par le substrat plan de matériau isolant 1 (verre époxy par exemple) et sont isolées électriquement entre elles. Si le gaz qui remplit l'intérieur de la chambre 4 est du xénon par exemple, a une pression comprise entre 10 et 20 bars, l'ionisation du xénon produit des électrons (e⁻) attirés par la plaque 18 et des ions Xe⁺ attirés vers les électrodes.

La collection de charges positives par les électrodes produit la circulation d'un courant dans celles-ci. C'est ce courant qui est mesuré par les moyens 14 mentionnés plus haut. Les valeurs des courants ainsi mesurés pour chaque électrode sont fournies à des moyens de traitement, non représentés sur la figure, pour obtenir l'image de la coupe de l'objet ou de l'organe dans le plan P.

Les électrodes 2 sont formées de bandes conductrices 19, orientées en direction de la fenêtre 5. Ces bandes sont par exemple des bandes de cuivre imprimées sur le substrat isolant 1, parallèle au plant P du faisceau. Le substrat isolant et les électrodes 2 sont séparés de la plaque de polarisation 18 par l'entretoise 3 électriquement isolante et peu absorbante des rayons X. Cette entretoise permet de maintenir parallèle la plaque 18 et le substrat 1.

Selon l'invention, l'entretoise isolante 3 a la forme d'un cadre (figure 1) ayant deux faces d'appui 20, 21, (figure 2) opposées et parallèles. La plaque de polarisation 18 s'appuie sur la première face 20 de l'entretoise. La deuxième face 21 sert d'appui à une première bande conductrice 22 ; cette bande est disposée sur le substrat 1, s'étend transversalement par rapport aux électrodes 2, en regard de la fenêtre 5, et le long de la première électrode 23a et de la dernière électrode 23b de l'ensemble d'électrodes 2. La deuxième face 21 de l'entretoise 3 sert d'appui à une deuxième bande conductrice 24 qui repose sur une bande isolante 25 superposée à l'ensemble d'électrodes 2, s'étendant transversalement par rapport à ces électrodes, à proximité de la face arrière 13 de l'ensemble de détection 11. La face 21 de l'entretoise isolante 3 présente, au voisinage de la bande conductrice 24 et de la bande isolante 25, un léger décalage de niveau par rapport au niveau de cette face, au voisinage de la bande conductrice 22, correspondant approximativement à l'épaisseur de la bande 25.

Les première et deuxième bandes conductrices 22, 24, sont reliées, comme on le verra plus loin en détail, par des moyens de connexion, au potentiel de référence 16. Ce potentiel de référence 16, est également relié aux moyens de mesure et correspond à la masse électrique de ces moyens. De cette façon, le potentiel appliqué à ces bandes conductrices est voisin de celui que est appliqué aux électrodes de mesure de l'ensemble 2.

Comme le montre la figure 1, la première bande conductrice 22 est une bande de cuivre par exemple, qui est imprimées sur le substrat 1. La deuxième bande conductrice 24 peut également être une bande de cuivre imprimée sur la bande isolante 25.

Les moyens de connexion des électrodes 2, des première et deuxième bandes et de la plaque 18 comportent un ensemble 26 de pistes conductrices, telles que la piste 27, imprimée sur le substrat isolant 1. Ces pistes peuvent être des bandes de cuivre par exemple, imprimées sur ce substrat. Ces pistes sont respectivement reliées, de façon continue, aux électrodes de l'ensemble 2 et aux première et aux deuxième bandes conductrices 22, 24. La piste 28 est ainsi reliée à la bande conductrice 22. Ces différentes pistes permettent, grâce au connecteur 29, qui est constitué de manière connue et qui ne sera pas décrit ici en détail, de relier les électrodes aux moyens de mesure 14, et de relier les bandes conductrices au potentiel de référence 16. Ce conducteur est bien entendu situé à l'extérieur de la chambre 4. La liaison électrique entre la bande conductrice 24 et la bande conductrice 22 est assurée soit par contact direct entre ces deux bandes, soit par un fil de connexion 31 reliant ces deux bandes. La plaque 18, qui doit être alimentée par la tension fournie par la source 15, est reliée à cette source par la piste conductrice 32, elle-même reliée à la plaque 18 par un fil de connexion 33. Les différentes pistes 27, 28, 32, traversent au moins une ouverture 35 de la face arrière constituée par le couvercle 9 fermant la chambre 4, par un montage de sortie tel que 36. Ce montage est fixé autour du substrat 1 et des pistes 26 ; il est aussi fixé au couvercle 9. Ces pistes sont reliées comme indiqué plus haut, grâce au connecteur 29, aux moyens de mesure 14, à la source 15, d'alimentation et au potentiel de référence 16.

Le montage de sortie 36 comporte un manchon 37 . Ce manchon comprend une ouverture permettant le passage des pistes conductrices et du substrat 1. Ces pistes sont fixées dans cette ouverture par une colle isolante et étanche 38. Ce manchon s'engage dans l'ouverture 35 de la face arrière 9 de la chambre 4 et comporte un épaulement muni de moyens 39 (non représentés sur cette figure) pour le fixer sur la face arrière 9 de la chambre . Un joint d'étanchéité 40 est interposé entre cet épaulement et la face arrière de la chambre.

Dans l'exemple de réalisation représenté sur cette figure, le substrat isolant 1 se subdivise en deux parties 41, 42, s'engageant chacune dans un montage de sortie identique au montage 36. Cette subdivision permet notamment l'utilisation de connecteur 29 de plus faible dimension et une meilleure répartition des pistes conductrices sur le substrat 1. Le connecteur, les moyens de mesure et d'alimentation, ainsi que le potentiel de référence, n'ont pas été représentés sur la figure 2.

Un autre empilement de détection 43 est représenté en exemple sur la figure 2. Cet empilement est identique et symétrique de l'empilement 17, par rapport au plan du substrat. D'autres empilements de même type pourraient être montés à l'intérieur de la chambre 4. Des interconnexions entre des pistes de sortie de ces différents empilements pourraient être réalisées, de façon connue, par des pions de connexion. Un détecteur présentant un grand nombre d'empilements, du même type que celui qui a été décrit, peut permettre d'effectuer une tomographie de type multicoupes.

L'invention permet bien d'atteindre les buts mentionnés plus haut : les connexions des électrodes avec les moyens de mesure et la connexion de la plaque avec la source d'alimentation, qui sont assurées grâce aux pistes conductrices décrites, sont très simples ; ce type de connexion évite la présence de fils de liaison intérieurs à la chambre qui, comme indiqué plus haut, créent des champs électriques perturbateurs. La traversée de ces pistes dans la face arrière de la chambre, grâce au montage utilisant un manchon, est très simple et permet notamment de maintenir la position de l'empilement de détection à l'intérieur de l'enceinte, en association avec d'autres moyens non représentés sur les figures. Les pistes réalisées sous forme de circuits intégrés sont beaucoup plus fiables que les liaisons par fils, car aucune soudure n'est nécessaire. Les première et deuxième bandes conductrices, sur lesquelles repose l'entretoise, créent un anneau de garde dont le potentiel est voisin de celui des électrodes de mesure et évite ainsi l'apparition de charges parasites. Enfin, la chambre 4 et le manchon 37 étant de façon avantageuse conducteurs, le montage de sortie formé par ce manchon conducteur 37 intervient aussi comme un anneau de garde, autour des pistes de sortie. La chambre joue le rôle d'une cage de Faraday. En effet, la chambre et le manchon sont portés à un potentiel voisin du potentiel des électrodes.

## Revendications

1. Détecteur pour tomographie à rayons X apte à détecter des rayons X incidents ayant traversé un organe ou un objet et formant un faisceau plan (P) de faible épaisseur, comprenant au moins une chambre étanche (4), remplie par au moins un gaz ionisable par les rayons X incidents traversant une fenêtre d'entrée (5) s'étendant sur une face avant de cette chambre, l'intérieur de la chambre étant partiellement occupé, entre sa face avant (5) et une face arrière (9) opposée à la face avant, par un ensemble de détection (11) qui présente une face avant (12) en regard de la fenêtre (5) et une face arrière (13) en regard de la face arrière (9) de la chambre, cette chambre étant aussi partiellement occupée, entre la face arrière (13) de l'ensemble de détection et la face arrière (9) de la chambre, par des moyens (26, 28, 32) traversant la face arrière (9) de la chambre pour connecter l'ensemble de détection (11) avec des moyens de mesure (14) et d'alimentation (15) électrique, extérieurs à la chambre, l'ensemble de détection (11) comprenant :
- au moins un empilement (17) de détection qui comporte une plaque conductrice (18) de polarisation, parallèle au plan (P) du faisceau incident ;
- un ensemble (2) d'électrodes (19) de mesure délimité par une première et une dernière électrodes (23a, 23b), ces électrodes collectant les charges résultant de l'ionisation du gaz par les rayons X et étant formées de bandes conductrices orientées vers la fenêtre (5), dispersées sur un substrat plan isolant (1) parallèle au plan (P) du faisceau ;
- une entretoise (3) électriquement isolante, pour séparer la plaque de polarisation (18) et les électrodes (2) et pour maintenir parallèles cette plaque (18) et le substrat (1) ;
caractérisé en ce que l'entretoise isolante (3) a la forme d'un cadre ayant deux faces opposées parallèles d'appui (20, 21), la plaque (18) s'appuyant sur une première de ces faces d'appui (20), la deuxième face d'appui (21) s'appuyant sur une première bande conductrice (22) disposée sur le substrat (1), transversalement aux électrodes (2), en regard de la fenêtre (5) et le long de celle-ci, ainsi que le long de la première et de la dernière électrodes (23a, 23b) dudit ensemble, la deuxième face d'appui (21) s'appuyant sur une deuxième bande conductrice (24) reposant sur une bande isolante (25) superposée transversalement aux électrodes (2), à proximité de la face arrière (13) de l'ensemble de détection ; les moyens de connexion comportant des pistes conductrices (27, 28, 32) imprimées sur le substrat (1) respectivement reliées à l'intérieur de ladite chambre auxdites électrodes (2), aux première et deuxième bandes conductrices (22, 24) et à la plaque (18), ces pistes étant respectivement reliées à l'extérieur de la chambre, auxdits moyens de mesure (14), aux moyens d'alimentation électrique (15) et à un potentiel de référence (16), le substrat (1) et les pistes traversant au moins une ouverture de la face arrière (9) de la chambre par un montage de sortie (36), fixé autour du substrat (1) et des pistes (27, 28, 32) et fixé à la face arrière (9) de la chambre.

2. Détecteur selon la revendication 1,
caractérisé en ce que ledit montage de sortie comporte un manchon conducteur (37) comprenant une ouverture de passage des pistes et du substrat qui sont fixées dans cette ouverture par une colle isolante et étanche (38), ce manchon s'engageant dans l'ouverture de la face arrière (9) de la chambe et comportant un épaulement muni de moyens de fixation (39) sur la face arrière de la chambre, un joint d'étanchéité (40) étant interposé entre cet épaulement et la face arrière (9) de la chambre.

3. Détecteur selon la revendication 1,
caractérisé en ce que la première bande conductrice (22) est imprimée sur le substrat (1), la deuxième bande conductrice (24) étant imprimée sur la bande isolante (25).

## Patentansprüche

1. Detektor für Röntgentomographie, geeignet, einfallende Röntgenstrahlen, die ein Organ oder einen Gegenstand durchquert haben und ein ebenes Bündel (P) geringer Dicke bilden, zu detektieren, enthaltend wenigstens eine dichte Kammer (4), die mit wenigstens einem Gas gefüllt ist, das von den einfallenden und ein Eintrittsfenster (5), das sich über eine Vorderseite dieser Kammer erstreckt, durchtretenden Röntgenstrahlen ionisiert werden kann, wobei das Innere der Kammer zwischen ihrer Vorderseite (5) und einer der Vorderseite gegenüberliegenden Rückseite (9) teilweise von einer Detektionsanordnung (11) erfüllt ist, welche eine Vorderseite (12) gegenüber dem Fenster (5) und eine Rückseite (13) gegenüber der Rückseite (9) der Kammer besitzt, wobei diese Kammer zwischen der Rückseite (13) der Detektionsanordnung und der Rückseite (9) der Kammer ebenfalls teilweise mit Einrichtungen (26, 28, 32) erfüllt ist, die durch die Rückseite (9) der Kammer hindurchdurchgehen, um die Detektionsanordnung (11) mit Einrichtungen zur Messung (14) und zur elektrischen Versorgung (15) außerhalb der Kammer zu verbinden, wobei die Detektionsanordnung (11) enthält:
- wenigstens eine Detektionsschicht (17), die eine leitende Polarisationsplatte (18) besitzt, die parallel zur Ebene (P) des einfallenden Bündels ist,
- eine Anordnung (2) von Meßelektroden (19), begrenzt von einer ersten und einer letzten Elektrode (23a, 23b), wobei diese Elektroden die von der Ionisierung des Gases durch die Röntgenstrahlen stammenden Ladungen sammeln und aus zu dem Fenster (5) hin gerichteten Streifen gebildet werden, die auf einem ebenen isolierenden Substrat (1), das parallel zur Ebene (P) des Bündels ist, verteilt sind,
- ein elektrisch isolierendes Abstandsstück (3), um die Polarisationsplatte (18) und die Elektroden (2) zu trennen und um diese Platte (18) und das Substrat (1) parallel zu halten,
dadurch gekennzeichnet, daß das isolierende Abstandsstück (3) die Gestalt eines Rahmens mit zwei gegenüberliegenden parallelen Auflageflächen (20, 21) hat, wobei die Platte (18) auf einer ersten dieser Auflageflächen (20) liegt, die zweite Auflagefläche (21) auf einem ersten leitenden Streifen (22) liegt, der auf dem Substrat (1) quer zu den Elektroden (2) gegenüber dem Fenster (5) und an diesem entlang sowie entlang der ersten und der letzten Elektrode (23a, 23b) der Anordnung angeordnet ist, die zweite Auflagefläche (21) auf einem zweiten leitenden Streifen (24) liegt, der auf einem isolierenden Streifen (25) ruht, der nahe der Rückseite (13) der Detektionsanordnung quer auf den Elektroden (2) angebracht ist, wobei die Verbindungseinrichtungen auf das Substrat (1) gedruckte Leiterbahnen (27, 28, 32) umfassen, die jeweils im Innern der Kammer mit den Elektroden (2), mit dem ersten und dem zweiten leitenden Streifen (22, 24) und mit der Platte (18) verbunden sind, wobei die Leiterbahnen jeweils außerhalb der Kammer mit den Meßeinrichtungen (14), mit den elektrischen Versorgungseinrichtungen (15) und mit einem Referenzpotential (16) verbunden sind, wobei das Substrat (1) und die Bahnen wenigstens eine Öffnung der Rückseite (9) der Kammer durch eine Austrittsvorrichtung (36), die um das Substrat (1) und die Bahnen (27, 28, 32) herum befestigt und an der Rückseite (9) der Kammer befestigt ist, durchqueren.

2. Detektor nach Anspruch 1, dadurch gekennzeichnet, daß die Austrittsvorrichtung eine leitende Hülse (37) aufweist, die eine Öffnung zum Durchtritt der Bahnen und des Substrats enthält, die in dieser Öffnung durch einen isolierenden und dichten Kitt (38) befestigt sind, wobei diese Hülse sich in die Öffnung der Rückseite (9) der Kammer einfügt und einen Vorsprung besitzt, der mit Einrichtungen (39) zur Befestigung auf der Rückseite der Kammer versehen ist, wobei zwischen diesen Vorsprung und die Rückseite (9) der Kammer eine Dichtung (40) eingefügt ist.

3. Detektor nach Anspruch 1, dadurch gekennzeichnet, daß der erste leitende Streifen (22) auf das Substrat (1) gedruckt ist, der zweite leitende Streifen (24) auf den isolierenden Streifen (25) gedruckt ist.

## Claims

1. X-ray tomographic detector able to detect incident X-rays which have passed through an organ or an object and forming a planar beam (P) of limited thickness, having at least one tight chamber (4), filled by at least one gas ionizable by the incident X-rays passing through an entrance window (5) extending over a front face of said chamber, the interior of the chamber being partly occupied, be tween its front face (5) and a rear face (9) opposite to the front face, by a detection means (11), which has a front face (12) facing the window (5) and a rear face (13) facing the rear face (9) of the chamber, said chamber also being partly occupied, between the rear face (13) of the detection means and the rear face (9) of the chamber, by means (26, 28, 32) traversing the rear face (9) of the chamber for connecting the detection means (11) to the measuring and electric power supply means (15) outside the chamber, the detection means (11) comprising at least one detection stack (17) incorporating a conductive, polarizing plate (18), parallel to the plane (P) of the incident beam, an array (2) of measuring electrodes (19) defined by a first and a last electrodes (23a, 23b), said electrodes collecting the charges resulting from the ionization of the gas by the X-rays and being formed by conductive strips oriented towards the window (5), dispersed on a planar, insulating substrate (1) parallel to the plane (P) of the beam, an electrically insulating brace (3), for separating the polarizing plate (18) and the electrodes (2) and for keeping parallel the said plate (18) and the substrate (1), characterized in that the insulating brace (3) is in the form of a frame having two opposite, parallel bearing faces (20, 21), the plate (18) bearing on a first of said bearing faces (20), the second bearing face (21) bearing on a first conductive strip (22) located on the substrate (1), transversely to the electrodes (2) and facing the window (5) and along the latter, as well as along the first and last electrodes (23a, 23b) of said means, the second bearing face (21) bearing on a second conductive strip (24) resting on an insulating strip (25) superimposed transversely to the electrodes (2), in the vicinity of the rear face (13) of the detection means, the connection means having printed conductive tracks (27, 28, 32) on the substrate respectively connected to the interior of the said chamber to the said electrodes (2), to the first and second conductive strips (22, 24) and to the plate (18), said tracks being respectively connected to exterior of the chamber, to the said measuring means (14), to the electric power supply means (15) and to a reference potential (16), the substrate (1) and the tracks passing through at least one opening of the rear face (9) of the chamber by an output connection (36), fixed around the substrate (1) and tracks (27, 28, 32) and fixed to the rear face (9) of the chamber.

2. Detector according to claim 1, characterized in that the output connection has a conductive sleeve (37) with a passage opening for the tracks and the substrate and which are fixed in said opening by a tight, insulating adhesive (38), said sleeve engaging in the opening of the rear face (9) of the chamber and having a shoulder provided with means (39) for fixing to the rear face of the chamber, a seal (49) being interposed between said shoulder and the rear face (9) of the chamber.

3. Detector according to claim 1, characterized in that the first conductive strip (22) is printed on the substrate (1), the second conductive strip (24) being printed on the insulating strip (25).
